# EUROPEAN PATENT SPECIFICATION

(11) **EP 2 905 395 B1**
(45) Date of publication and mention of the grant of the patent: **06.06.2018**
(21) Application number: 15000253.3
(22) Date of filing: 28.01.2015
(51) Int. Cl.: E04F 11/18, F16B 2/14

(54) **Apparatus for connecting panellings to a building element**
Vorrichtung zum Verbinden von Plattenelementen zu einem Bauelement
Appareil pour raccorder des bardages à un élément de construction

(30) Priority: 11.02.2014 IT AN20140019
(43) Date of publication of application: 12.08.2015
(73) Proprietor: Faraone S.R.L., 64018 C.da Salinello Tortoreto (TE) (IT)
(72) Inventor: Faraone, Sabatino, 64018 C.da Salinello - Tortoreto (TE) (IT)
(74) Representative: Premru, Rok

(56) References cited:
- WO-A1-2015/092701
- DE-U1- 20 111 872
- DE-U1-202009 004 773
- DE-U1-202010 016 187
- DE-U1-202013 104 330
- DE-U1-202014 100 163
- US-A1- 2002 195 595

## Description

The object of the present invention is an apparatus for connecting panellings to a building element so as to define technical structures for the protection and/or delimitation and/or furnishing, such as, by way of a non-limiting example, parapets, railings, balustrades, fences, partition walls, glass windows and the like.

More in particular, the object of the present invention is a connection system for panels, in particular glazed, of different thicknesses, to a building component for installation.

The invention therefore falls within the building field, more precisely in the sector of transparent architecture.

Of course, nothing prevents the application of the finding to be extended also to fields different from the building one.

It is known that for the installation of glazed panels on supporting building structures and or surfaces to be delimited or that need protection metal profiles are used, preferably of aluminium, which may be anchored to the building component and adapted to act as a base for said glazed panels, retaining them in a substantially vertical set-up. Document DE 20 2010 016187 describes, e. g., a known system for the installation of panels comprising a "U" shaped profile, within which the lower end of a panel is seated, spacing means and an element that locks the panel.

These known systems, despite being widely widespread and used for a long time, are not free from drawbacks.

For example, a first order of drawbacks is that with the current metal profiles it is not always easy to place panellings in the correct lying, especially if they exhibit thicknesses not coinciding with those "nominal"; moreover, very often, dimensional imperfections and inaccuracies in said thicknesses, may affect a perfect locking of the panel on the relevant metal profile with negative consequences in the aesthetics and safety of the technical structure made, which remains substantially weak; an imperfect positioning of the metal profile also leads to at least aesthetically unsatisfactory installations.

Set-up defects are also very visible on an array of consecutive panellings, especially if having a glossy and/or reflecting surface.

The object of the present invention is to eliminate the drawbacks of the prior art listed above, by designing an innovative apparatus for connecting panellings, preferably glass windows, to a building component and defining technical structures for the protection and/or delimitation and/or furnishing, such as, by way of a non-limiting example, railings, balustrades, fences, partition walls and the like.

More in particular, an object of the present invention is to provide an innovative profile capable of retaining panellings of any thickness in use in the building industry and height and capable of compensating for any dimensional defects in their thicknesses.

A further object of the present invention is to provide an innovative profile for retaining panellings that allows an easier and quicker set-up calibration thereof. These and other objects are achieved by the invention, with the features listed in the annexed independent claim 1.

Further features of the present invention shall be better highlighted by the following description of a preferred embodiment, in accordance with the patent claims and illustrated in the enclosed designs. Such figures should be considered as having an illustrative and non-limiting purpose, in which:
- Fig. 1 shows a view of the system for connecting panellings to a building element according to the invention;
- Fig. 2 shows a view of the system for connecting panellings to a building element according to a second variant of the invention;
- Fig. 3 shows a view of the system for connecting panellings to a building element according to a third variant of the invention.

The features of the invention shall now be described, using the references contained in the annexed figures. It should be noted that any dimensional and spatial term (such as "lower", "upper", "right", "left" and the like) refers, unless otherwise indicated, to the position according to which the object of the invention is shown in the drawings which not necessarily coincides with the position of the finding in operating conditions.

With the purpose of highlighting some features instead of others, not necessarily what described in the annexed drawings is perfectly scaled.

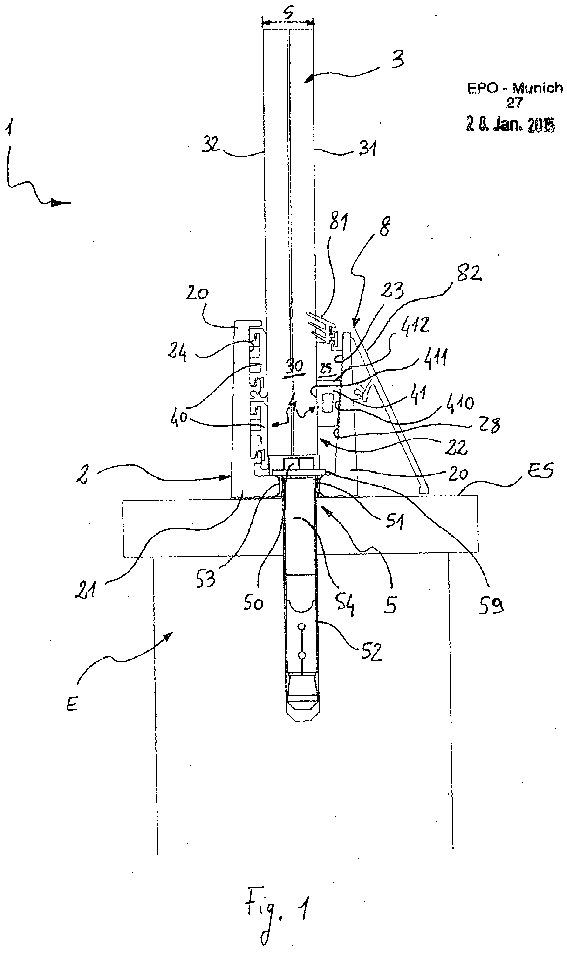

As clearly shown in Fig. 1, 1 globally indicates an apparatus for the connection of a panelling 3 to a building element E (e.g., a useable floor, a flooring, a masonry-work, a wall or the like).

By way of an example only and without any limiting intent, said panelling 3 is preferably a glass plate although all that shall be said in the description may be extended to any other type of panelling suitable to define structures for protection, delimitation and/or furnishing.

More precisely, said apparatus 1 comprises a profile 2, generally in aluminium (or alloys thereof) intended to be constrained to a building element E and suitably shaped to retain and lock said panelling in vertical set-up.

For this purpose, the "U" shaped profile 2 comprises two vertical sides 20, parallel to each other, integral to a horizontal core 21; through core 21, by means of appropriate fastening means 5 (which shall be briefly referred to hereinafter), the connection of the profile 2 to the building element E is obtained.

The sides 20 and the core 21 determine in mutual combination a cavity 22 intended to seat at least a portion 30 of the lower edge of the panelling 3 which projects upwards for its remaining part.

Between at least one face 31, 32 of said panelling 3, inserted into the cavity 22, and the inner wall 23, 24 of at least one side 20 of the profile 2 a gap 25 is defined, the purpose whereof shall be understood shortly.

For the moment, it should be noted that said gap 25 has a trapezoidal profile section, with its part farthest from the core 21 (distal portion) of a width, i.e. cross dimension, larger than its part closest to the same core 21 (proximal portion).

As clearly shown in the attached Figs., i.e., the distance between a face 31, 32 of the panelling 3 and the opposite inner wall 23, 24 of a side 20 of the profile 2 decreases as it approaches the core 21 of the same profile 2, said inner wall 23, 24 being inclined.

Locking means 4 of the profile 2 allow to retain said panelling 3 inside the cavity 22 in a substantially vertical set-up.

More in particular, said locking means 4 may consist of at least one vertical stop 40 and a pressing member 41, capable of acting on the mutually opposite faces 31, 32 of the panelling 3, blocking it in said cavity 22.

Said vertical stop 40 may consist of a sector of the inner wall 23, 24 of the sides 20 of said profile 2 or, preferably (see Fig. 1), of a first fixed jaw 40, constrained (e.g., "snap-wise") to said wall 23, 24 and having a flat surface adapted to associate in front coupling with the opposite face 31, 32 of the panelling 3. This second solution is preferred because it allows to choose such first jaw 40 of the most suitable material and/or thickness.

The pressing member 41, instead, consists of a separate prismatic body, capable of being inserted and pushed downwards inside said gap 25 until a further movement thereof is prevented from the occurred interference with the tapered inner wall 23, 24 of the profile 2 and the overlooking face 31, 32 of the panelling 3.

Any knurlings 28 on the inner wall 23, 24 of said profile 2 favour the interference and the locking of the pressing member 41 in the gap 25.

In other words, a plurality of "interference positions" for the pressing member 41, each function of the thickness S of the panelling 3, is identified within the trapezoidal gap 25; at said "interference positions" the lower edge 30 of said panelling 3 is thus retained and securely tightened between said vertical stop 40 and the pressing member 41.

As shown in the annexed figures, the pressing member 41 has cross dimensions such as to allow the insertion inside the gap 25 from its distal section and is suitably shaped to allow, during its movement up to an "interference position", a substantial sliding of its outer 410 and inner faces 411 respectively on the tapered wall 23, 24 of the profile 2 and the face 31, 32 of the panelling 3.

The pressing member 41 is therefore a body with a trapezoidal section, comprising an upper face 412 having cross dimensions comprised between those of the distal and proximal portion of the gap 25, an outer face 410 having the same inclination of the inclined wall 23, 24 of the profile 2 and an opposite vertical inner face 411.

In other words, the pressing member 41 constitutes a wedge 41 which, inserted and forced into the gap 25, locks the lower portion 30 of the panelling 3 against the respective vertical stop 30 of the inner wall 23, 24 of the profile 2.

Such a locking system 4 allows fixing and locking panellings 3 of any thickness S vertically to the profile 2, also compensating for any of the dimensional errors thereof (compared to the "nominal" value).

As said, the profile 2 is in turn constrained to the building element E.

By way of a non-limiting example, this is achieved by means of a special fixing system 5 comprising at least one threaded screw 50 (or similar/equivalent means, e.g., a nut and relative threaded pin, possibly provided with washer 59) capable of being inserted in a through hole 51 of the core 21 of said profile 2 and to be tightened inside a corresponding hole 52 of the building element E (arranged with, for example, expansion plugs or similar means, shown only schematically in the annexed Figs.). A particular aspect of this fixing system 5 is the presence within the through hole 51 of the core 21 of the profile 2 of a seal 53, coaxial to the stem 54 of the screw 50; the seal 53, by the effect of the tightening of said screw 50, is able to seal the underlying hole 52 of the building element E, preventing any infiltration of water (e.g., rainwater or resulting from other atmospheric phenomena).

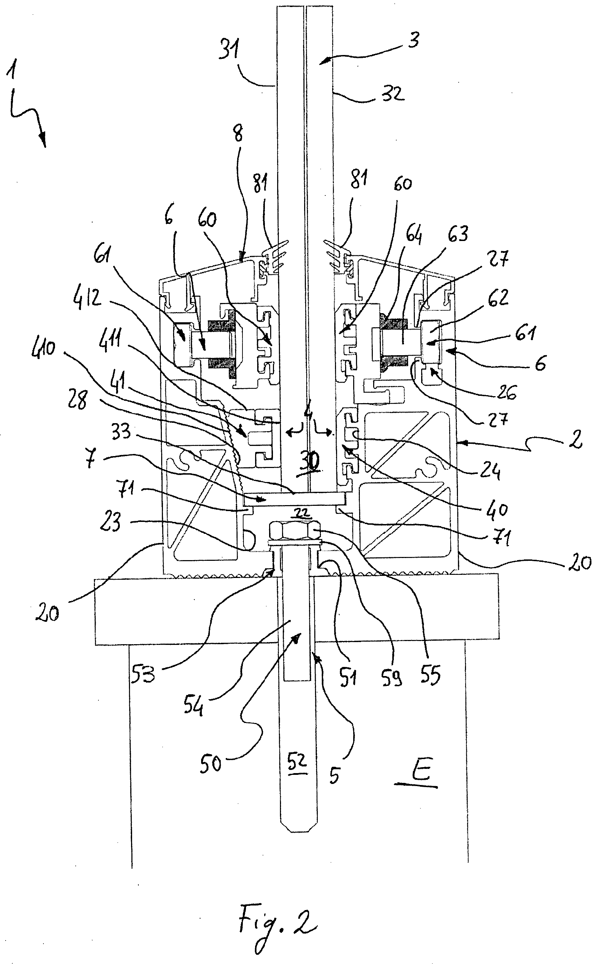

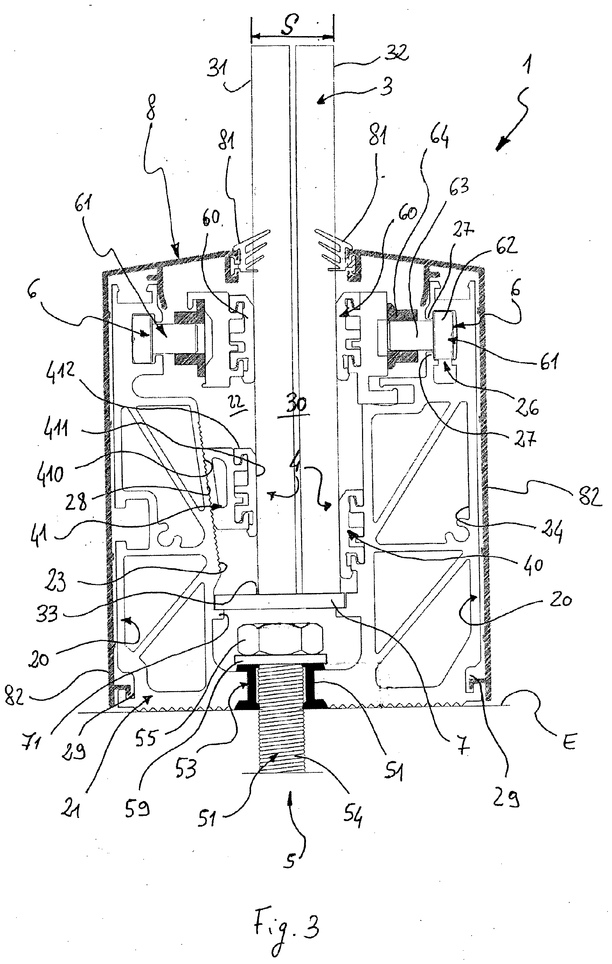

A base 7 (see. Figs. 2 and/or 3) may be inserted resting on a special longitudinal track 71 of the profile 2, in the proximity of its core 21, to prevent the contact of the panelling 3 with the head 55 of said fixing screws 50 (or similar means, such as a nut of a threaded pin), while serving as a support surface for the lower edge 33 thereof. According to the invention, in the proximity of the distal ends of at least one side 20 of the profile 2 known adjusting means 6 of the angular orientation of the panellings 3, besides of its thickness, are provided.

As clearly shown in Fig. 2 or 3, said adjusting means 6 comprise an adjusting screw 61 cooperating with a respective second jaw 60, also adapted to associate in front coupling with the opposite face 31, 32 of the panelling 3.

Having described the profile 2 of the invention in its most general aspects, let's now describe, without any limiting intents, some preferred embodiments.

More precisely, the adjusting screw 61 comprises a first head 62 retained in a seat 26 of the inner wall 23, 24 of at least one side 20 of the profile 2, a pin 63, which projects crosswise from said seat 26 towards the panelling 3 and a second head 64 (hereinafter called "thrust"), coaxial to the pin 63 and capable of cooperating, as it shall be seen, with the jaw 60.

Retaining edges 27 allow to retain the pin 63 in crosswise direction to the profile 2, while maintaining the possibility of its sliding in the longitudinal direction; this allows to have adjusting means 6 in any position along the longitudinal direction of the profile 2 providing a great versatility of use and high adaptability to the most varied application cases.

Thrust head 64 and pin 63 are threaded complementarily; by tightening the thrust head 64 on the respective pin 63 (e.g., through adjustment keys), it is possible to push on the jaw 60 to abutment against an opposite face 31, 32 of the panelling 3. It is obvious that such thrust exerted by the jaw 60 is balanced by a corresponding reaction of the pin 63 which discharges on the relevant side 20 of the profile 2.

Because, as seen, the panelling 3 is retained at the bottom between the above-mentioned stop 40 and pressing member 41, the thrust exerted by the jaw 60 on the top portion of the faces 31, 32 of the panelling 3 allows to orient it angularly allowing to obtain, quickly and with a continuous and progressive modulation, the adjustment required to achieve its perfect verticality.

It has been found advantageous, at least for a constructive variant of the profile 2 of the invention, not shown in the figures, to apply, with the same purposes, said adjusting screws 61 also to the first jaw 40, previously described and cooperating with the pressing member 41 for the locking of the panelling 3 inside the cavity 22 of the profile 2.

According to a preferred embodiment of the invention, said jaws 40, 60 may consist of adjustment bars, capable of pressing over the entire longitudinal length of the panelling 3.

It is also preferable that at least the parts of the jaws 40, 60 and of the pressing member 41 in front coupling with the panelling 3 are made (or coated) in plastic material in order to prevent the damage thereof (e.g., see Fig. 2).

Casings 8 may hook (by interference and/or snap, or by means of known equivalent systems) on at least a part of the outer outline of the profile 2 providing it with an increased aesthetic appeal. In this regard reference is made to the casing 8 of Fig. 2 capable of hooking on top of the profile 2 making its internal cavity 22 inaccessible.

As shown in the annexed figures, said casing 8 can carry seals 81 which allow sealing said cavity 22 and/or providing bilateral vertical wings 82 (see Fig. 3) for the coverage of the sides 20 of the profile 2. In this case, said wings 82 may be hooked on guiding grooves 29 which allow the longitudinal sliding of the casing 8 on the profile 2.

Nothing prevents that at least one of the wings 82 is inclined relative to the vertical to reduce the support surface ES on the building component for the foot of those intending to bypass the panelling 3 and act, therefore, as an anti-climb barrier (Fig. 1). Further casings, not shown in the annexed Figs., close frontally the profile 2 of the invention.

Finally, according to a further variant of the invention, inside the cavity 22 of the profile 2 it is possible to provide the insertion, according to known techniques and methods (which, therefore, shall not be discussed any further), of a light source (not shown) adapted to illuminate, from the bottom, the panelling 3, preferably glazed.

Without any limiting intent, such light source preferably consists in one or more luminous LEDs (e.g., a LED bar), of the type available on the market and capable of emitting light of different colours.

In that case, any base 7 for supporting the lower edge 33 of the panelling 3, previously described, is a translucent base.

The mounting of the apparatus 1 of the invention may be quickly summarized in a sequence of essential steps which consist in:
- constraining the profile 2 to the building element E
- inserting the panelling 3 inside the cavity 22 of the profile 2, bringing one of its faces 31, 32 in front coupling with at least one vertical stop 40 of the inner wall 23, 24 of a side 20 of the profile 2;
- inserting the pressing member 41 inside the gap 25 formed between the other face 31, 32 of the panelling 3 and the other inner wall 23, 24 of the profile 2, and pushing it downwards up to an "interference position" at which the panelling 3 will be tight and firmly retained between vertical stop 40 and pressing member 41;
- when the above adjusting means 6 are provided, adjusting the angular orientation of the panelling 3 up to obtain its perfect verticality; it is clear that in that case, the mounting of said adjusting means 6 (in particular of its adjusting bar) must be subsequent to the insertion and locking by interference of the pressing member 41 inside the gap 25.

It is useless, being them well known to the man skilled in the art, to dwell on the final step of installation of the casings 8 on the profile 2.

The apparatus 1 of the invention allows to fully achieve the intended objects and allows numerous application possibilities on building components of various types and use. In particular, it is possible to install glazed panellings of any thickness and height on said building elements, compensating for any dimensional defects thereof (e.g., in the thicknesses) and ensuring their perfect verticality.

These glazed panellings are therefore particularly suitable, by way of a non-limiting example, for the construction of balustrades or parapets or railings or for equipping enclosing elements.

With the innovative apparatus of the invention, the risk that rain water reaches and infiltrates in the building element for installation of the panellings is also eliminated, preserving, in fact, its structural integrity for a long time.

It is clear that in the practical embodiment of the invention numerous modifications and further variants may be provided within the scope of the appended claims.

## Claims

1. Apparatus (1) for connecting a panelling (3) to a building element (E) comprising at least one profile (2) capable of being constrained to said building element (E), said profile (2) comprising an inner cavity (22), defined between the vertical sides (20), parallel to each other, and a horizontal core (21) of said profile (2), adapted to receive at least one lower portion (30) of said panelling (3),
said at least one lower portion (30) of said panelling (3) being retained and tightened between a vertical stop (40) of at least one inner wall (23, 24) of said sides (20) and a pressing member (41), capable of reciprocally acting on the opposite faces (31, 32) of said panelling (3), said vertical stop (40) comprising a flat surface adapted to connect in front coupling with a first face (31, 32) of said panelling (3), and
said pressing member (41) consisting of a wedge (41) capable of:
- being inserted in a gap (25) defined between the second face (31, 32) of said panelling (3), opposed to the first, and the facing inner wall (23, 24) of said profile (2), and
- being pushed downwards up to reaching an "interference position" within said gap (25).
**characterised in that**
said apparatus (1) further comprises adjustment means (6) for the angular orientation of said panelling (3) located in the proximity of the distal end of at least one side (20) of said profile (2), said distal end being the end furthest from said horizontal core (21), said adjustment means (6) comprising an adjusting screw (61) cooperating with a respective second jaw (60), adapted to associate in front coupling with the face (31, 32) of said panelling (3).

2. Apparatus (1) according to claim 1,
**characterised in that**
- said gap (25) has a trapezium profile which provides for a distal part, relative to the core (21), with cross dimension greater than the proximal part thereof, said inner wall (23, 24) defining said gap (25) being inclined,
- said pressing member (41), with substantially trapezoidal section, providing for:
- an upper face (412) with cross dimensions comprised between those of said distal and proximal part of said gap (25)
- a substantially vertical inner face (411)
- an outer face (410) having substantially the same inclination of said inclined inner wall (23, 24) of said gap (25)

3. Apparatus (1) according to the previous claim,
**characterised in that**
said inclined inner wall (23, 24) is knurled.

4. Apparatus (1) according to any previous claim,
**characterised in that**
said vertical stop (40) is a sector of said inner wall (23, 24) of the sides (20) of said profile (2).

5. Apparatus (1) according to any one of the previous claims except for 4,
**characterised in that**
said vertical stop (40) is a first jaw (40) constrained on said inner wall (23, 24) of the sides (20) of said profile (2).

6. Apparatus (1) according to the previous claim,
**characterised in that**
said first jaw (40) is firmly mounted on said inner wall (23, 24) of the sides (20) of said profile (2).

7. Apparatus (1) according to claim 5,
**characterised in that**
said first jaw (40) cooperates with at least an adjusting screw constrained to said inner wall (23, 24) of the sides (20) of said profile (2), said adjusting screw contributing to the adjustment of the angular orientation of said panelling (3).

8. Apparatus (1) according to any previous claim,
**characterised in that** said adjusting means (6) comprise, reciprocally cooperating with each other, at least said adjusting screw (61) and said second jaw (60) adapted to connect in front coupling with a facing face (31, 32) of said panelling (3), said at least one adjusting screw (61) being retained, in cross direction relative to said profile (2), inside a seat (26) obtained on said inner wall (23, 24) of its sides (20).

9. Apparatus (1) according to claim 5 or claim 8,
**characterised in that** said first (40) and/or second (60) jaw consist of adjusting bars capable of pressing on the whole longitudinal length of said panelling (3).

10. Apparatus (1) according to claim 5 or claim 8,
**characterised in that**
said first (40) and/or second (60) jaw and/or said pressing member (41) are made of, or coated with, plastic material.

11. Apparatus (1) according to any previous claim,
**characterised in that**
casings (8) are hooked on at least one part of the outer outline of said profile (2), said casings (8) comprising also seals (81) which allow sealing said inner cavity (22) of said profile (2).

12. Apparatus (1) according to the previous claim,
**characterised in that**
at least one of said casings (8) may comprise at least a side wing (82) for covering said sides (20) of said profile (2) suitable for acting as anti-climb barrier of the panelling (3), said wing (82) being inclined relative to the vertical.

13. Apparatus (1) according to any previous claim,
**characterised in that**
said profile (2) is constrained to said building component (E) by means of at least a threaded screw (50) capable of being inserted in a through hole (51) of the core (21) of said profile (2) and of being tightened into a corresponding hole (52) of the building element (E), inside said through hole (51) being inserted, coaxially with the stem (54) of said at least one screw (50), a seal (53) capable of sealing said hole (52) of the building element (E), by the effect of tightening of said at least one screw (50).

14. Apparatus (1) according to any previous claim,
**characterised in that**
said panelling (3) is a glazed panelling.

## Patentansprüche

1. Vorrichtung (1) zum Verbinden einer Verkleidung (3) mit einem Gebäudeelement (E), umfassend mindestens ein Profil (2), das geeignet ist, an dem Gebäudeelement (E) befestigt zu werden, wobei das Profil (2) einen inneren Hohlraum (22) aufweist, der zwischen den vertikalen Seiten (20), die parallel zueinander sind, und einem horizontalen Kern (21) des Profils (2) definiert ist, der geeignet ist, mindestens einen unteren Abschnitt (30) der Verkleidung (3) aufzunehmen,
wobei der mindestens eine untere Abschnitt (30) der Verkleidung (3) zwischen einem vertikalen Anschlag (40) von mindestens einer Innenwand (23, 24) der Seiten (20) und einem Druckglied (41) gehalten und festgezogen ist, die geeignet sind, gegenseitig auf die gegenüberliegenden Seiten (31, 32) der Verkleidung (3) einzuwirken, wobei der vertikale Anschlag (40) eine ebene Fläche aufweist, die geeignet ist, sich mit einer vorderen Verbindung mit einer ersten Seite (31, 32) der Verkleidung (3) zu verbinden, und
wobei das Druckglied (41) aus einem Keil (41) besteht, der geeignet ist:
- in einen Spalt (25) eingefugt zu werden, der zwischen der zweiten Seite (31, 32) der Verkleidung (3), die der ersten gegenüberliegend ist, und der zugewandten Innenwand (23, 24) des Profils (2) definiert ist, und
- nach oben gedrückt zu werden, bis eine "Interferenzposition" innerhalb des Spaltes (25) erreicht ist,
**dadurch gekennzeichnet, dass**
wobei die Vorrichtung (1) ferner Einstellmittel (6) für die Winkelausrichtung der Verkleidung (3) aufweist, die in der Nähe des distalen Endes von mindestens einer Seite (20) des Profils (2) angeordnet sind, wobei das distale Ende das am weitesten von dem horizontalen Kern (21) entfernte Ende ist, wobei die Einstellmittel (6) eine Einstellschraube (61) aufweisen, die mit einer entsprechenden zweiten Klemmbacke (60) zusammenwirkt, die geeignet ist, sich mit einer vorderen Verbindung mit der Seite (31, 32) der Verkleidung (3) zu verbinden.

2. Vorrichtung (1) nach Anspruch 1,
**dadurch gekennzeichnet, dass**
- der Spalt (25) ein Trapezprofil aufweist, das einen distalen Teil relativ zum Kern (21) mit einer Querabmessung, die größer als der proximale Teil davon ist, aufweist, wobei die Innenwand (23, 24), die den Spalt (25) definiert, geneigt ist,
- wobei das Druckglied (41) mit im Wesentlichen trapezförmigem Querschnitt aufweist:
- eine Oberseite (412) mit Querabmessungen, die zwischen jenen des distalen und proximalen Teils des Spalts (25) liegen,
- eine im Wesentlichen vertikale innere Seite (411),
- eine Außenseite (410), die im Wesentlichen die gleiche Neigung der geneigten Innenwand (23, 24) des Spalts (25) aufweist,

3. Vorrichtung (1) nach dem vorhergehenden Anspruch,
**dadurch gekennzeichnet, dass**
die geneigte Innenwand (23, 24) gerändelt ist.

4. Vorrichtung (1) nach einem der vorhergehenden Ansprüche,
**dadurch gekennzeichnet, dass**
der vertikale Anschlag (40) ein Bereich der Innenwand (23, 24) der Seiten (20) des Profils (2) ist.

5. Vorrichtung (1) nach einem der vorhergehenden Ansprüche mit Ausnahme des Anspruchs 4,
**dadurch gekennzeichnet, dass**
der vertikale Anschlag (40) eine erste Klemmbacke (40) ist, die an der Innenwand (23, 24) der Seiten (20) des Profils (2) befestigt ist.

6. Vorrichtung (1) nach dem vorhergehenden Anspruch,
**dadurch gekennzeichnet, dass**
die erste Klemmbacke (40) fest an der Innenwand (23, 24) der Seiten (20) des Profils (2) montiert ist.

7. Vorrichtung (1) nach Anspruch 5,
**dadurch gekennzeichnet, dass**
die erste Klemmbacke (40) mit mindestens einer Einstellschraube zusammenwirkt, die an der Innenwand (23, 24) der Seiten (20) des Profils (2) befestigt ist, wobei die Einstellschraube zum Einstellen der Winkelausrichtung der Verkleidung (3) beiträgt.

8. Vorrichtung (1) nach einem der vorhergehenden Ansprüche,
**dadurch gekennzeichnet, dass** die Einstellmittel (6) mindestens die Einstellschraube (61) und die zweite Klemmbacke (60), die geeignet ist, sich mit einer vorderen Verbindung mit einer gegenüberliegenden Seite (31, 32) der Verkleidung (3) zu verbinden, aufweisen, die wechselseitig miteinander zusammenwirken, wobei die mindestens eine Einstellschraube (61) in Querrichtung relativ zu dem Profil (2) in einem Sitz (26), der an der Innenwand (23, 24) seiner Seiten (20) erhalten ist, gehalten ist.

9. Vorrichtung (1) nach Anspruch 5 oder 8,
**dadurch gekennzeichnet, dass**
die erste (40) und/oder die zweite (60) Klemmbacke aus Einstellstäben bestehen, die geeignet sind, auf die ganze längsverlaufende Länge der Verkleidung (3) zu drücken.

10. Vorrichtung (1) nach Anspruch 5 oder 8,
**dadurch gekennzeichnet, dass**
die erste (40) und/oder die zweite (60) Klemmbacke und/oder das Druckglied (41) aus Kunststoff gefertigt oder damit beschichtet sind.

11. Vorrichtung (1) nach einem der vorhergehenden Ansprüche,
**dadurch gekennzeichnet, dass**
Gehäuse (8) an mindestens einem Teil des äußeren Umrisses des Profils (2) eingehakt sind, wobei die Gehäuse (8) auch Dichtungen (81) aufweisen, die das Abdichten des inneren Hohlraums (22) des Profils (2) ermöglichen.

12. Vorrichtung (1) nach dem vorhergehenden Anspruch,
**dadurch gekennzeichnet, dass**
mindestens eines der Gehäuse (8) mindestens einen Seitenflügel (82) zum Abdecken der Seiten (20) des Profils (2) aufweisen kann, der geeignet ist, als Klettersperre der Verkleidung (3) zu fungieren, wobei der Flügel (82) gegenüber der Vertikalen geneigt ist.

13. Vorrichtung (1) nach einem der vorhergehenden Ansprüche,
**dadurch gekennzeichnet, dass**
das Profil (2) durch mindestens eine Gewindeschraube (50), die geeignet ist, in ein Durchgangsloch (51) des Kerns (21) des Profils (2) eingefügt zu werden und in einem entsprechenden Loch (52) des Gebäudeelements (E) festgezogen zu werden, an der Gebäudekomponente (E) befestigt ist, wobei in das Durchgangsloch (51) koaxial zu dem Schaft (54) der mindestens einen Schraube (50) eine Dichtung (53) eingefügt ist, die geeignet ist, das Loch (52) des Gebäudeelements (E) durch die Wirkung des Festziehens der mindestens einen Schraube (50) abzudichten.

14. Vorrichtung (1) nach einem der vorhergehenden Ansprüche,
**dadurch gekennzeichnet, dass**
die Verkleidung (3) eine Glasverkleidung ist.

## Revendications

1. Appareil (1) pour relier un panneau (3) à un élément de construction (E) comprenant au moins un profilé (2) susceptible d'être contraint audit élément de construction (E), ledit profilé (2) comprenant une cavité interne (22), définis entre les côtés verticaux (20), parallèles entre eux, et un noyau horizontal (21) dudit profilé (2), adapté pour recevoir au moins une partie inférieure (30) dudit panneau (3),
ladite au moins une partie inférieure (30) dudit panneau (3) étant retenue et serrée entre une butée verticale (40) d'au moins une paroi interne (23, 24) desdits côtés (20) et un élément de pression (41) aptes à agir réciproquement sur les faces opposées (31, 32) dudit panneau (3),
ladite butée verticale (40) comprenant une surface plate adaptée pour se connecter en couplage avant avec une première face (31, 32) dudit panneau (3), et
ledit élément de pression (41) consistant en un coin (41) capable de :
- étant inséré dans un interstice (25) défini entre la seconde face (31, 32) dudit panneau (3), opposée à la première, et la paroi interne en regard (23, 24) dudit profilé (2), et
- étant poussé vers le bas jusqu'à atteindre une « position d'interférence » à l'intérieur dudit interstice (25).
**caractérisé en ce que**
ledit appareil (1) comprend en outre des moyens de réglage (6) pour l'orientation angulaire dudit panneau (3) situé à proximité de l'extrémité distale d'au moins un côté (20) dudit profilé (2), ladite extrémité distale étant la extrémité la plus éloignée dudit noyau horizontal (21), lesdits moyens de réglage (6) comprenant une vis de réglage (61) coopérant avec une seconde mâchoire (60) respective adaptée pour s'associer en face de la face (31, 32) dudit panneau (3).

2. Appareil (1) selon la revendication 1,
**caractérisé en ce que**
- ledit interstice (25) a un profilé trapézoïdal qui fournit une partie distale, par rapport au noyau (21), avec une dimension transversale supérieure à la partie proximale de celle-ci, ladite paroi interne (23, 24) définissant ledit interstice (25) étant inclinée,
- ledit élément de pression (41), avec une section sensiblement trapézoïdale, fournissant :
- une face supérieure (412) avec des dimensions transversales comprises entre celles desdites parties distale et proximale dudit interstice (25)
- une face interne (411) sensiblement verticale
- une face externe (410) ayant sensiblement la même inclinaison de ladite paroi intérieure (23, 24) inclinée dudit interstice (25)

3. Appareil (1) selon la revendication précédente,
**caractérisé en ce que**
ladite paroi interne (23, 24) inclinée est moletée.

4. Appareil (1) selon l'une quelconque des revendications précédentes,
**caractérisé en ce que**
ladite butée verticale (40) est un secteur de ladite paroi interne (23, 24) des côtés (20) dudit profilé (2).

5. Appareil (1) selon l'une quelconque des revendications précédentes à l'exception de 4,
**caractérisé en ce que**
ladite butée verticale (40) est une première mâchoire (40) contrainte sur ladite paroi interne (23, 24) des côtés (20) dudit profilé (2).

6. Appareil (1) selon la revendication précédente,
**caractérisé en ce que**
ladite première mâchoire (40) est fermement montée sur ladite paroi interne (23, 24) des côtés (20) dudit profilé (2).

7. Appareil (1) selon la revendication 5,
**caractérisé en ce que**
ladite première mâchoire (40) coopère avec au moins une vis de réglage contrainte sur ladite paroi interne (23, 24) des côtés (20) dudit profilé (2), ladite vis de réglage contribuant au réglage de l'orientation angulaire dudit panneau (3).

8. Appareil (1) selon l'une quelconque des revendications précédentes,
**caractérisé en ce que** lesdits moyens de réglage (6) comprennent, coopérant réciproquement entre eux, au moins ladite vis de réglage (61) et ladite seconde mâchoire (60) adaptée pour se connecter en accouplement avant avec une face en regard (31, 32) dudit panneau (3), ladite au moins une vis de réglage (61) étant retenue, en direction transversale par rapport audit profilé (2), à l'intérieur d'un siège (26) obtenu sur ladite paroi interne (23, 24) de ses côtés (20)

9. Appareil (1) selon la revendication 5 ou la revendication 8,
**caractérisé en ce que**
ladite première mâchoire (40) et/ou seconde mâchoire (60) sont constituées de barres de réglage aptes à appuyer sur toute la longueur longitudinale dudit panneau (3).

10. Appareil (1) selon la revendication 5 ou la revendication 8,
**caractérisé en ce que**
ladite première mâchoire (40) et/ou seconde (60) et/ou ledit élément de pression (41) sont constitués ou revêtus de matière plastique.

11. Appareil (1) selon l'une quelconque des revendications précédentes,
**caractérisé en ce que**
les enveloppes (8) sont accrochées sur au moins une partie du contour externe dudit profilé (2), lesdites enveloppes (8) comprenant également des joints (81) qui permettent d'obturer ladite cavité interne (22) dudit profilé (2).

12. Appareil (1) selon la revendication précédente,
**caractérisé en ce que**
au moins l'une desdites enveloppes (8) peut comprendre au moins une aile latérale (82) pour recouvrir lesdits côtés (20) dudit profilé (2) apte à servir de barrière anti-montée du panneau (3), ladite aile (82) étant incliné par rapport à la verticale.

13. Appareil (1) selon l'une quelconque des revendications précédentes,
**caractérisé en ce que**
ledit profilé (2) est contraint audit élément de construction (E) au moyen d'au moins une vis filetée (50) susceptible d'être insérée dans un trou traversant (51) du noyau (21) dudit profilé (2) et de étant serré dans un trou (52) correspondant de l'élément de construction (E), à l'intérieur dudit trou traversant (51) étant inséré, coaxialement avec la tige (54) de ladite au moins une vis (50), un joint (53) d'obturation dudit trou (52) de l'élément de construction (E), par effet de serrage de ladite au moins une vis (50).

14. Appareil (1) selon l'une quelconque des revendications précédentes,
**caractérisé en ce que**
ledit panneau (3) est un panneau vitré.
